# EUROPEAN PATENT SPECIFICATION

(11) **EP 3 434 077 B1**
(45) Date of publication and mention of the grant of the patent: **26.07.2023**
(21) Application number: 17719641.7
(22) Date of filing: 20.03.2017
(51) Int. Cl.: H05B 47/10

(54) **A LIGHTING SYSTEM, AND A METHOD OF PRODUCING A LIGHT PROJECTION**
BELEUCHTUNGSSYSTEM UND EIN VERFAHREN ZUR HERSTELLUNG EINER LICHTPROJEKTION
SYSTÈME D'ÉCLAIRAGE ET PROCÉDÉ DE PRODUCTION D'UNE PROJECTION LUMINEUSE

(30) Priority: 23.03.2016 FI 20165242
(43) Date of publication of application: 30.01.2019
(73) Proprietor: LIGHT COGNITIVE OY, 00370 Helsinki (FI)
(72) Inventor: SALOMAA, Sami, 00330 Helsinki (FI)
(74) Representative: Boco IP Oy Ab
(86) International application number: PCT/FI2017/050188
(87) International publication number: WO 2017/162916

(56) References cited:
- EP-A1- 0 545 474
- WO-A1-2008/002073
- WO-A1-2015/049146
- WO-A1-2015/188086
- WO-A2-2007/069143
- WO-A2-2012/095765
- US-A1- 2003 030 063
- US-A1- 2013 002 144
- LUKAS HOSEK ET AL: "An analytic model for full spectral sky-dome radiance", ACM TRANSACTIONS ON GRAPHICS (TOG), vol. 31, no. 4, 1 July 2012 (2012-07-01), pages 1-9, XP055389699, US ISSN: 0730-0301, DOI: 10.1145/2185520.2185591
- PREETHAM A J ET AL: "A practical analytic model for daylight", COMPUTER GRAPHICS PROCEEDINGS. SIGGRAPH 99; [COMPUTER GRAPHICS PROCEEDINGS. SIGGRAPH], ACM ? - NEW YORK, NY, USA, 1515 BROADWAY, 17TH FLOOR NEW YORK, NY 10036 USA, 1 July 1999 (1999-07-01), pages 91-100, XP058128781, DOI: 10.1145/311535.311545 ISBN: 978-0-201-48560-8
- PEREZ R ET AL: "All-weather model for sky luminance distribution-Preliminary configuration and validation", SOLAR ENERGY, PERGAMON PRESS. OXFORD, GB, vol. 50, no. 3, 1 March 1993 (1993-03-01), pages 235-245, XP025451513, ISSN: 0038-092X, DOI: 10.1016/0038-092X(93)90017-I [retrieved on 1993-03-01]

## Description

### TECHNICAL FIELD

The invention is concerned with a lighting system having a unit for a light projection and a method for producing a light projection on the unit used in the lighting system. In particular the invention is related to a lighting system according to claim 1 and a method of producing a light projection with the lighting system according to claim 17. Preferred embodiments of the invention are defined by the dependent claims.

### BACKGROUND

Daylight, or the light of day, is the combination of all direct and indirect sunlight during the daytime. This includes direct sunlight, diffuse sky radiation, and often both of these reflected from the Earth and terrestrial objects. Sunlight scattered or reflected from objects in outer space is not generally considered daylight. Thus, moonlight is never considered daylight, despite being "indirect sunlight".

Daylighting an indoor space is primarily made with openings such as windows and skylights that allow daylight into the building. In total or partial absence of daylight, such as at night and evening time or in windowless spaces, artificial lighting is performed electrically by different kinds of light spruces, such as lamps.

Daylight has a "better light quality" than electric lighting. Some studies have shown that this variability of daylight has a relaxing effect on the eyes, and has a mental and physiological influence. There is no doubt that people generally find daylight more pleasant than electric lighting as their primary source of light.

Light quality is a holistic term which includes attributes like light distribution, color rendition, flicker, sparkle, variability and influence on biology.

Daylight in diffused form tends to illuminate surfaces more evenly and brightly in all directions and offers better sense of space. Electric lighting typically illuminates in a certain direction e.g. in the horizontal or vertical plane. Moreover, sparkle or highlighting three dimensional objects is enhanced by daylight.

Furthermore, colors look more natural in daylight than under electrical lighting, as electric light sources are stronger in some areas of the light spectrum and weaker in others. The human eye's ability to discriminate colors is dependent on the spectral content of light, and daylight contains light of almost all visible wavelengths, whereas most electric lamps emit most of their light over a limited wavelength range. Daylight thus has a continuous spectrum and therefore provides better color rendition.

In addition, as daylight does not flicker and e.g. fluorescent lights can have a noticeable flicker, people blame this for a multitude of problems like headache, eye strain and attention deficit problems.

The inherent variability of daylight as clouds move through the sky, successively obscuring and revealing the sun. Some studies have suggested that people have an innate desire to be in contact with nature white and people occupying small windowless offices were much more likely to have pictures of natural scenes on their wall than were people with easy access to windows, possibly as a way of compensating for the absence of real natural scenes and for having a source of environmental stimulation.

Attempts have been made to recreate the effects of daylight artificially. This is however expensive in terms of both equipment and energy consumption and is mostly applied in specialist areas such as filmmaking, where light of such intensity is required anyway.

There are also daylight lamps for e.g. offices and lamps used for light therapy. Light therapy or phototherapy (classically referred to as heliotherapy) consists of exposure to daylight or to specific wavelengths of light.

Technologies like polychromatic polarized light, lasers, light-emitting diodes, fluorescent lamps, dichroic lamps or very bright, and full-spectrum light have been used for producing artificial daylight.

WO publication 2007/069143 discloses a lighting system that includes at least one controllable light source configured to provide a light with at least one attribute, an image renderer rendering an image of a nature theme, such as the sun or the sky, and a system controller selecting the image in correspondence to the selected attribute. The system controller receives at least one script that is associated with different light attributes, such as different light intensities or brightness levels and changes the image in accordance with the script. The system is configured to alter the light in response to signals from an input device.

WO publication 2015/049146 discloses a lighting system that uses an array of lighting elements, which provide light in different directions. The intensity of the lighting elements is controlled in dependence on a time-varying parameter of a position of a light emitting source, and the intensity, color or color temperature of the light emitted by a light source, so that the system simulates directional light. An impression of natural daylight is provided by means of direct light and diffuse light.

European patent 0 545 474 discloses a lighting appliance with a reflecting screen, side by side with a frame and fluorescent or halogen light sources positioned there between and along the extension of the frame. The light beams emitted from the light sources are conveyed outside the appliance. The light sources are of different color temperatures and can be electrically powered separately in order to vary the intensity on the basis of the hour of the day intended to be simulated by using a predetermined software program.

Further prior art is presented in WO2012/095765. It discloses a system for providing illumination to a room. On e or more light sources are controlled by a controlling device for controlling the intensity and/or direction and/or color of the light emitted. The controlling device controls the light sources by means of a model simulating changes in daylight over a period of time.

Many of these solutions, however, do not provide a realistic daylight experience.

Since the sky dome shows continuous and smooth transition through many colors and shades, reproduction of such a view is challenging without using pixel technology as in a computer display. The purpose of a computer display is, however, to produce good quality view, but not to illuminate. Light dynamics, intensity and color reproduction of the sky light are even beyond the quality of any display. Pixel technology is therefore not a suitable technology for a daylight luminaire.

A central fact regarding the characteristics of the sky is that the colors of the sky change continuously and smoothly both spatially and temporally. The colors of the sky are very different at dawn and dusk compared to midday, colors differ when looking towards the sun or to the opposite direction, and when looking towards the horizon or towards the zenith.

A typical view shows a smooth transition of colors and light intensity from the colors of the horizon, through different shades of lighter blue to a deep blue color higher up in the sky. During the day, the horizon may show up an almost pure and bright white color depending on the amount of haze and scattering and at dawn and dusk, the horizon may show different rich shades of red, green and turquoise.

In a typical view of sky, there is much less color and intensity change in the horizontal direction than in the vertical direction, wherein there is only moderate variation throughout the full 360 degrees view angle. Consequently, a window-like view often show almost constant colors in the horizontal direction and the color and intensity transition appears almost only in the vertical direction.

Therefore, for a luminaire representing a view of the sky, the largest challenge is in the production of a light distribution that is aligned with a line going from zenith to the horizon.

### OBJECT OF THE INVENTION

The object of the invention is the creation of a lighting system, which generates a natural looking sky or other view that produces good quality light by a cost-effective implementation.

### SUMMARY

The lighting system of the invention comprises a plurality of light sources arranged to emit light of defined radiation spectra. A smoothing layer is positioned on a first distance from the light sources and through which the light is emitted. The light sources are positioned on mutual distances from each other behind the smoothing layer. The lighting system is mainly characterized in that the light sources are separately powered and grouped into separately controlled color areas. The light emitted from the light sources have overlapping radiation patterns and an intensity state spectrally optimized by numerical simulation for producing a defined color representation on the basis of a spectral model that simulates light of a sky or other views and with continuous and smooth color transitions on the smoothing layer. The lighting system further comprises a computer configured to perform a computation involving said numerical simulation and to transform data resulting from the numerical simulation into settings for the light sources. A controller is configured to receive the settings in the form of input instructions, which are stored therein as software instructions for the intensity state of the light sources. The controller is further configured to control the individual light sources of the light system through an interface, to generate the defined color representation. The controller has control electronics and power supplies for each color area to control the light sources, and optics for beam shaping and/or collimation for controlling the direction of light sources.

The method of the invention for producing a light projection with a lighting system according to the invention comprising producing the light projection as a color representation on a smoothing layer. The method is characterized by spectrally optimizing the intensity state of the light emitted from the light sources by numerical simulation in a computer for producing a defined color representation on the basis of a spectral model that simulates light of a sky or other views and with continuous and with smooth color transitions on the smoothing layer. Data resulting from the numerical simulation is transformed into settings for the intensity of the light sources in the form of input instructions to a controller. The controller controls the individual light sources of the light system through an interface to generate the defined color representation in each color area. Optics is used for beam shaping and/or collimation for controlling the direction of light sources.

The preferable embodiments of the invention have the characteristics of the subclaims.

Thus, the radiation pattern of each light source is selected to produce said color representation, whereby e.g. the light beams of the light emitted from two or more of the light sources have overlapping radiation patterns selected to produce said color representation on the smoothing layer as a sum of light.

The positions and radiation spectra of the light sources are selected to produce different color areas as a light projection to constitute said color representation.

Said first distance between the smoothing layer and said mutual distances of the light sources are selected to produce said color representation. Also the angle in which the light emits from each light source to the smoothing layer is selected to produce said color representation.

Said color representation can be produced on the basis of a spectral model created by transforming colors of the results of measurements, samples, video, photographs, estimations, and/or simulations of natural light or other views into a spectrum by mathematical functions. Alternatively, said color representation is produced as an approximation of a model that simulates a light distribution.

The light sources in the lighting device are arranged in groups into 3 - 12, preferably 4-6, separate color areas for approximation of color curves constituting said color representation. The lighting device further comprises a controller with stored software instructions and data to control the light system with different functions to generate the defined color representation. The controller has further stored instructions with data to generate the defined color representation and a temporal variation or development of that. The data results from a computation involving numerical simulation of a light distribution and from its spectral optimization which transforms the simulated light into settings of the light sources. The computation can take place in another computer, and only the computed instructions are shipped with the light system.

The controller also has control electronics for each color area. The controller is adapted to control the light sources using said software instructions in dependence of on a time-varying parameter related to the intensity, spectra, color or color temperature of the light emitted by the light sources.

The model can be a sky dome model that approximates full spectrum daylight for various atmospheric conditions. Said model simulates a variety of sky-like light distributions reflecting the location and orientation of the earth relative to the sun, the scattering of light through Rayleigh scattering and Mie scattering, the effect of ground albedo and the effect of haze.

Each light source or the sum of more than one light sources have an emitting intensity state that is close to the sky light spectrum modelled for the corresponding position on the smoothing layer, and the emitting intensity state matches the color perceived by humans eyes as estimated by technical observer functions.

The color representation is a constant view and can be changed by changing parameters related to the intensity, color or color temperature of the light emitted by the light sources. The color representation can also show temporal variation.

The controller is adapted to control the light sources in dependence of on a time-varying parameter related to the intensity, color or color temperature of the light emitted by the light sources. The parameters in the software instructions are varied in accordance with a cycle imitating a real day rhythm.

The optimization of the intensity of the light sources to resemble the sky light distribution is performed by numerical simulation of color curves representing the sky light distribution and transforming the data achieved from the simulation into settings for the intensity of the light sources in the form of input instructions to the controller. The color curves are lines that represent colors at different times calculated from an arch spanning from the horizon to more than 10 degrees elevation angle of the sky dome.

The invention enables the use of a moderate number of separately controllable color areas which may be composed of one or more light sources.

The lighting system of the invention can e.g. be implemented as a luminaire and produces a view of light of good quality on a light projection unit or panel that permits light penetration, implemented as a smoothing layer. The light projection unit can be a diffusor or some translucent unit implemented as a smoothing layer that mixes the light beams of one or more light sources so that the light penetrating the smoothing layer is a sum of light beams from different light sources.

The view of light on the smoothing layer is a color representation having a light distribution that resembles the view of a natural sky or other view both by visual perception and by its spectral content. This view may be called a virtual window. Even if the light resembles the view of e.g. the sky, it is important to point out that the view is not on a display showing an image of the view - it is a luminaire that produces light and a view similar to e.g. the light of the sky.

Especially, the similarity to e.g. the sky means that not only the color and intensity distribution of the color representation produced by the method of the invention is natural and smooth, the spectrum of the light is very close to the true sky light as well and the optimization of light produced is performed within the visible spectrum.

Typically, sky light does not show bands of color but rather a continuous natural shift of colors with smooth transitions from one color to another. One cannot visually detect any locations where a certain color area starts or ends.

The invention makes use of how the human vision system - consisting of eyes, the optic nerve and the brains - works in processes huge amount of data every second. One of the mechanisms within this process analyzes the spatial distribution of light that enters eyes.

Producing a smooth transition through different colors requires that the change in color or intensity is almost constant. Any discontinuity or period of a more rapid change will have the effect of banding, that is, the color appear to change step-wise and the areas of slower change almost appear as areas or bands of constant color.

Reproduction of a realistic sky view is therefore a challenging process. High quality rendering of this view could be achieved with a high quality computer display, where invisibly small closely spaced light sources can produce smooth light transition without any discontinuities.

The principles used in the invention to produce a luminaire with a natural sky view are to define the criteria for the distance between the smoothing layer and the light sources and the mutual distance between the light sources so that a minimum number of color areas to produce natural light is needed.

For these principles, one embodiment of the invention uses a physical simulation for creation of a model to operate as the background for the light produced by the luminaire and a spectral optimization of the system so that the produced light corresponds to the true sky light or some other view both by color and spectral content. The light projected on the smoothing layer may show a constant view of the sky, or it may show temporal variation.

In this text, the terms used have the following meaning:

| | |
|---|---|
| Lighting system | is used in the text to cover a packaged as well as a single object, such as a lamp or a luminaire, but can also be a ceiling or another embedded illuminator built into some structure or furniture. Generally, it is a system generating light for illuminating purposes, such as a luminaire. |
| Color area | A spatial color domain controlled to show a certain light spectrum emitted from one or more light sources. |
| Light source | A LED or a group of two or more LEDs or other type of light producing devices that can produce a defined light spectrum. A light source could simply be a single source, but to make it tunable, |
| | two or more closely spaced sources are needed. Therefore, a light source can be defined as a given closed area with two or more independently controllable light emitting components - usually referred as channels. At the moment, these components are advantageously LEDs. |
| Smoothing layer | A light projection unit or panel that permits light penetration implemented as a smoothing layer, which can be a diffusor or some translucent unit implemented to mix the light beams of one or more light sources so that the light penetrating the smoothing layer is a sum of light beams from different light sources. |
| State | A vector of intensity values that define the intensity of each independent light emitting component in a light source. When defining the light of light sources, we define a *state* for the light sources. A state defines the intensity of each channel within the light sources. Lighting instructions for the lighting system, e.g. a luminaire, then contain a timed sequence of states for all the color areas of the luminaire. |
| xyY color spaceCIE 1931 | A standard for describing light. An x-y coordinate system estimates how eyes interprets the color of the intensity of the light. Y contains information of the intensity of light interpreted by eyes. |

By using the approach of this invention, a low number of light sources can be used if they are behind a smoothing layer, which smooths the light from the underlying light sources and if they are arranged and adjusted in the inventive way of the invention.

The use of a smoothing layer in a way according to the invention will lead to practically infinite resolution with continuous color transitions compared to a pixel display. Also several other factors need to be considered and optimized, including the number of light sources producing different light, the spatial distribution of the light sources, the light field intensity as a function of distance from the light sources, and the distance between the light sources and the smoothing layer.

In one embodiment of the invention, simulations of color curves, which represent colors at different times in a CIE diagram, such as a CIE-31 x-y diagram, of typical daylight or light of a sky dome, are performed. These curved light distributions are reproduced by using light sources arranged into at least three separate color areas by making use of e.g. parabolic approximation of the color curves.

By optimizing the spatial distribution of the light sources, the number of the light sources, the color of the light each of the light sources produces, the distance of the smoothing layer, and the radiation pattern or angle of the light sources in a way according to the invention results in a very natural sky view with good quality light, a smooth color and intensity transition, perceived to have infinite resolution, and with moderate financial costs.

A typical implementation uses four or more LEDs in combination to produce types of spectra, specifically chosen such that they sum is able to reproduce a varying spectrum of the sky light as closely as possible.

The light produced by the lighting system of the invention is in some preferable embodiments based on physical modeling of the sky dome light distribution. In general, sky light models range from very detailed physics models to very simple ones capable of generating some sky-like color distribution.

One implementation embodiment of the invention is based on an intermediate complexity level model, which produces a very realistic simulation for a variety of conditions and is not too heavy to compute. The model is based on the publication of Hosek & Wilkie, "An Analytic Model for Full Spectral Sky-Dome Radiance, ACM Transactions on Graphics (Proceedings of ACM SIGGRAPH 2012), 31(4), 2012. (ACM TOG 31(4), which improves over work of Perez & al. (PEREZ, R., SEALS, R., AND MICHALSKY, J. 1993. All-weather model for sky luminance distribution-preliminary configuration and validation. Solar Energy 50, 3, 235 - 245), and later of Preetham & et al. (PREETHAM, A. J., SHIRLEY, P., AND SMITS, B. 1999. A practical analytic model for daylight. In Proceedings of the 26th annual conference on Computer graphics and interactive techniques, ACM Press/Addison-Wesley Publishing Co., New York, NY, USA, SIGGRAPH '99, 91-100). This model takes into account the true location and orientation of earth relative to sun, scattering of light through Rayleigh scattering and Mie scattering, the effect of ground albedo, and the effect of haze. By making use of this model, a realistically looking view of the sky at any time, any location on earth and at any view angle can be produced.

Rayleigh scattering is the (dominantly) elastic scattering of light or other electromagnetic radiation by particles much smaller than the wavelength of the radiation. The particles may be individual atoms or molecules. It can occur when light travels through transparent solids and liquids, but is most prominently seen in gases. Rayleigh scattering results from the electric polarizability of the particles. Rayleigh scattering of sunlight in the atmosphere causes diffuse sky radiation, which is the reason for the blue color of the sky and the yellow tone of the sun itself.

The reddening of sunlight is intensified when the sun is near the horizon, because the density of air and particles near the earth's surface through which sunlight must pass is significantly greater than when the sun is high in the sky. The Rayleigh scattering effect is thus increased, removing virtually all blue light from the direct path to the observer. The remaining unscattered light is mostly of a longer wavelength, and therefore appears to be orange.

Mie scattering describes the scattering of an electromagnetic plane wave by a homogeneous sphere.

Albedo or reflection coefficient, is the diffuse reflectivity or reflecting power of a surface.

Such a variant of the above mentioned model is used, which calculates the results using the CIE XYZ (and xyY) color system. This data is then transformed in to spectral data using the method proposed by Simonds (1963), where the light spectrum can be reconstructed from weighted sum of eigenvectors of the sky color spectrum. The weights for the characteristic spectra are functions of x and y color coordinates.

The benefit of the approach - over a full spectral model - is that, in addition to simulation, it can be applied to other sources such as video recordings and photographs.

The sky light simulation returns the color and intensity distribution and the spectrum of the sky, but it does not contain any information about the light sources of the lighting system. In order to define the light for the luminaire, states of each light source are computed. This takes place in a two-phase non-linear spectral optimization and scaling procedure.

The lighting system of the invention can reproduce all the main features necessary to reproduce natural light over the day. These features are the light spectrum, the color(s), the intensity and the directionality through the smoothing layer over the simulated day. By providing several light sources and enabling them to be powered separately, the quality of light emitted can be influence to resemble the sky dome as much as possible all over the day, the simulation indicating the movement of the sun causing the different colors and intensities of light.

The lighting system can simulate the light intensity projected in a particular direction in a time-varying manner in order to simulate daylight by means of an array of lighting elements.

The emission spectra of the different light sources can differ from each other and be defined separately.

Thus, the lighting system can be controlled to implement time-dependent daylight effects and simulate different conditions, such as the positions of the sun, sunsets, sun rises, and different weather conditions.

The time of the day can be taken into account as parameter in the software instructions and be used as input by a user. Thus, the lighting system can simulate the day automatically or a user can by himself set the system to a specific setting, such as a sky simulation simulating a given time of the day or a desired variation according to the type of lighting desired by the user. The user can freely choose a day rhythm for the light which does not have to follow a real rhythm or alternate between static representations and variations.

Parameters in the software program can take into account the time of the day within a year, a geographic location. Thus, time and location dependent effects are obtained through the physical configurations and their control.

In the following, the invention is described in detail by means of some embodiments and examples to which the invention is not restricted.

### FIGURES

Figure 1 presents is a general schematic image of a lighting system of the invention
Figure 2 presents typical light sources to be used in the invention
Figure 3 presents the principle of determination of distances in accordance with the invention
Figure 4 presents the principle of light generation on the smoothing surface in accordance with the invention

### DETAILED DESCRIPTION

In a typical view of the sky, there is much less color and intensity change in the horizontal direction compared to the vertical direction. The lighting system of the invention that represents a view of sky is produced so that it has this kind of a natural light distribution aligned with a line from zenith to horizon. Any shape or orientation of the sky view can be simulated.

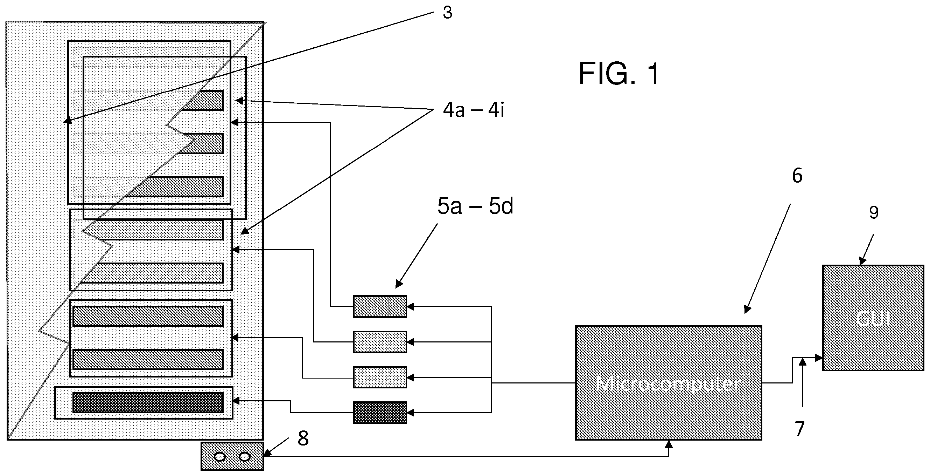

Figure 1 is a schematic view of an example construction of a luminaire of the invention.

Light is produced using a number of light sources 4a - 4i, which are grouped into defined color areas that produce defined colors for a defined segment of sky. The luminaire comprises light sources 4a - 4i, which are grouped into four separately controlled color areas in accordance with the colors of the sky dome. Reference numbers 5a - 5d are control electronics and power supplies for each color area. The four upmost light sources 4a - 4d are here controlled by 5a, the following two light sources 4e - 4f are here light sources controlled by 5b, the following two light sources 4g - 4h are here controlled by 5c, and the lowest light source 4i is a light source controlled by 5d.

The control electronics 5a - 5d are needed to control the system of the invention. In embodiments, wherein the view is constant or almost constant, showing only a single sky view, the control electronics 5a - 5d can be very simple or even be completely absent, if the light sources can produce the required light directly.

However, for a more advanced functionality and for a different and tunable view, more advanced control electronics is needed also. In one implementation, DMX-drivers 5a - 5d are used to control the light sources 4a - 4i and an embedded microcomputer 6 controls the luminaire throughout a DMX or other interface 9.

Typically, the choice for light sources are LEDs. However, the product as such does not require LEDs and any light source technology can be used, as long as it is capable of generating light that resembling the sky light.

The light visible for humans does not come directly from the light sources, but through a thin translucent smoothing layer 3, i.e. a layer of a material whose purpose is the make the light field as smooth and natural as possible. This material may operate by diffusion, scatter or by other means to convert the light from separate light sources into a continuous light field. The smoothing layer thus mixes the colors into a smooth distribution.

The smoothing layer 3 can e.g. be a diffusor located at a distance in front of the light sources 4a - 4i (when the layer is upright in a vertical position) or above (when the layer is upright in a vertical position). The light sources 4a - 4i behind the diffuser can be a LED array providing a matrix of lighting elements.

The luminaire also comprises optics (not shown) for beam shaping and/or collimation for controlling the direction of the light of the LEDs.

A microcomputer 6 is used as a controller with controls the luminaire and has the ability to connect to the Internet through WiFi, Ethernet or other wired or wireless Internet connection 7 allowing to control the luminaire by a smart phone, tablet or otherwise. Reference number 8 describes buttons for controlling the luminaire via the microcomputer 6.

The controller 6 receives input in the form of the time of the day, the time of the year (season), and geographical location in order to determine the natural daylight in accordance with the path of the sun. The controller also controls the individual LEDs.

The embedded microcomputer 6 has stored instructions to generate a defined sky view and its temporal development. This data results from a numerical simulation of a sky view light distribution and from spectral optimization which transforms the simulated sky light into settings of light sources. This computation takes place in another computer, and only the computed instructions are shipped with the luminaire.

The controller can be implemented with software and/or hardware to perform the various functions required. A processor or microcomputer are just examples of controllers, which employs one or more microprocessors that maybe programmed using software to perform the various functions required.

Thus, the product of the invention has three main components, i.e. the light sources 4a - 4i, the controller 5 and the smoothing layer 3.

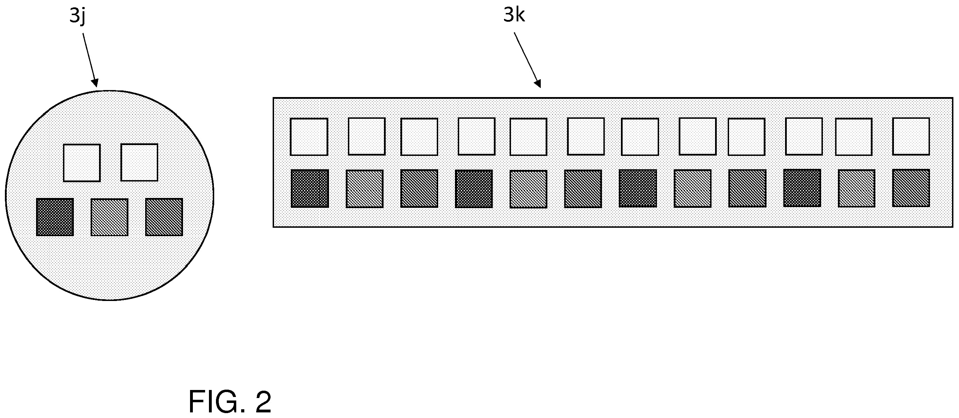

Figures 2a and 2b illustrate typical light sources to be used in the luminaire of the invention.

The lighting elements or light sources preferably comprises a matrix of LEDs with a controlled intensity. The LEDs can have different radiation emission spectra and color temperatures in order to generate different effects.

A light source consists in this example of 5 independently controllable channels like in figure 2a, wherein the channels can e.g emit light of different colors such as, warm white, cool white, red, green, in order to produce light of any color when these are used in combination.

Another example is a light source that consist of a line source with 24 independently controllable channels, wherein the channels can e.g emit light of different colors.

The array of LEDs can be arranged as a rectangular or hexagonal grid of individual LEDs. Each LED is individually controlled to provide a desired intensity. The LEDs emit colored light. The arrangement replicate the variation of light during a day.

The CIE 1931 color space system is a standard for describing light and defines quantitative links between physical pure colors (i.e. wavelengths) in the electromagnetic visible spectrum, and physiological perceived colors in human color vision. An x-y coordinate system estimates how eyes interprets the color of the intensity of the light. Y contains information of the intensity of light interpreted by eyes.

A color space maps a range of physically produced colors to an objective description of color sensations registered in the eye. The color space is a three-dimensional space, wherein a color is specified by a set of three numbers (the CIE coordinates *X*, *Y,* and *Z*, for example, or other values such as hue, colorfulness, and luminance) which specify the color and brightness of a particular homogeneous visual stimulus.

Any view of the sky shows a smooth color transition with a curved line in the x-y color plane. Neither is the color transition isotropic but there is a larger color variation aligned orthogonal to the horizon. A transition between two points forms a curved line in the color space.

To implement this color distribution and generate a curved line, there needs to be 3 - 4 or more light areas, such as 4 - 12, suitably 4-6, light areas aligned on an arch, i.e. on a straight line projection of the sky dome. Each of the light areas may be produced by on one or more light sources.

In the orthogonal direction, there may by zero, 1, or more light sources aligned in a regular grid more freely depending on the geometry since the color does not change as much in the horizontal direction.

The use of a smoothing layer in a way according to the invention will lead to practically infinite resolution with continuous color transitions compared to a pixel display when several factors are optimized, including the number of light sources producing different light, the spatial distribution of the light sources, the light field intensity as a function of distance from the light sources, and the distance between the light sources and the smoothing layer.

The invention uses at least three separate color areas for parabolic approximation of color curves represented by means of e.g. the CIE-31 color system to show x-y spans of sky light on lines from the horizon to any useful elevation angle for several times during the day. This works well for many cases, and having four independent color area add significantly more freedom to construct a proper light distribution. It has been found that it is not possible to reproduce this curved light distribution using light sources arranged into only two separate color area.

As was mentioned above, the invention optimizes several factors. The goal is to produce a smooth color distribution, but if the diffuser (or other smoothing layer) is too close to the light sources, the simulated light shows a color representation, wherein different color areas can be observed even there would not be any constant color area, since vision makes this conclusion from repetitive faster-slower changes in the color. When the diffuser is close enough to the optimum distance, the color distribution is very smooth and closely resembles the true simulated sky light.

Increasing the number of color areas beyond four will improve the light quality and allow a smaller distance between the smoothing layer and the light sources. On the other hand, adding more color areas will also lead to a need for more light sources, more control electronic and other electronics components thus increasing the complexity and financial cost of the device.

Moving the diffuser further away allows to use a lesser number of light sources with a defined color. The effect of the light sources on the smoothing layer is, however, relative and a result of the sum of the light from several light sources. A smooth transition from one color to another is a result of a weighted average of any light depending on how a single LED influences a given point on the smoothing layer.

Unfortunately, along with increased smoothing, the number of individual light sources affecting each point will increase. Consequently, this will lead to a whitening of the colors and to an undesired and flat color distribution of the resulting sky simulation. Moving the diffuser closer to the light sources will lead to richer colors, but may again result in banding of colors and also hot spotting of light near the light sources.

There is, no single unique solution for the distance between the light source and the smoothing layer distance, because the radiation pattern of the light sources and the mutual distance between the light sources also has to be taken into consideration. In the simplest form, one needs to pay attention to the radiation angle: the narrower the light beam is, the larger the distance needs to be in order to produce an even light field.

Thus, in addition to the properties of the smoothing layer, the other key properties affecting the smoothness of the light are the radiation pattern of the light source and the angle with which the light arrives onto the layer. FWHP (Full Width Half Power) is a typical parameter describing the radiation pattern of LEDs.

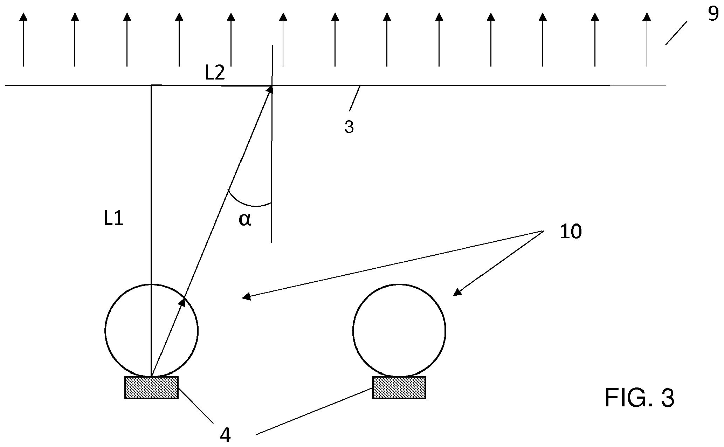

Figure 3 presents the principle of determination of distances in accordance with the invention illustrating that the distances to be designed are:
L1 = the distance between a light source and the smoothing layer
L2 = the distance between the light sources, which here is illustrated as half the distance between the light sources.

Also the angle α describing the angle in which the light beam from the light source enters the smoothing layer is shown.

The light on each location on the smoothing layer is a sum of light arriving from all light sources visible to that location. The intensity of the light coming from a light source depends on the radiation pattern of the light source and on the radiation angle, i.e. the angle between the smoothing layer normal and the radiation direction. Further attenuation of intensity takes place due to the area effect occurring when the light arrives to the smoothing layer with an angle.

In the invention, it has been found that the distances between the light sources, the color areas and the distance between the light source and the smoothing layer distance can be deduced from the normalized intensity curve the light source produces on the smoothing layer.

The criteria for a natural sky view and smooth transition between colors is in the invention that, in the region between two color area (and light sources), the relative intensity is within 0.75 and 0.95 at a location where the intensity curves cross between the two color areas.

In figure 3, reference number 3 is the smoothing layer, reference number 4 illustrates the light sources, reference number 9 the light from the luminaire, and reference number 10 is the radiation pattern.

An estimate for the distance between the light areas (and light sources) and for the smoothing layer - light source distribution can be estimated iteratively as follows:
1. Take an initial estimate for the distances, L1 is the light source - smoothing layer 3 distance, L2 is half the distance between the light sources 4.
2. L1 and L2 result in an angle α = arctan(L2/L1).
   Calculate the procuct Ic = r(α)*cos(α), where r is the light source radiation pattern function. Both r and cos are limited in the range [0, 1].
3. if Ic is too small, increase L1 or reduce L2. If Ic is too small reduce L1 or increase L2.
4. Repeat steps 2 to 4 until Ic is within acceptable limits. Results can be measured by measurement

A demonstrative calculation for a Lambertain radiator with r(α) = cos(α) would result in the following calculation
1. L1 =0.1, L2 = 0.07
2. α = arctan(L2/L1) = 34.99 degrees.
3. Ic = cos(α)*cos(α) = 0.67. Too small. Reduce L2 to 0.04.
4. α = 21.8 degrees.
5. Ic = 0.86, which should be fine.
6. This results in smoothing layer - light source distance L1 = 0.1 and inter light source distance being 2*L2 = 0.08;

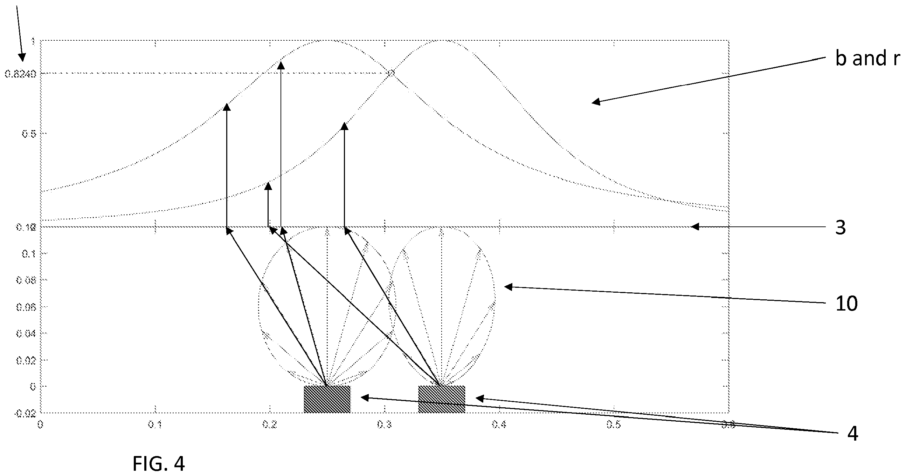

Figure 4 presents the principle of light generation on the smoothing surface in accordance with the invention. The x-axis is the position of the light sources along the luminaire and the y-axis the distance of the smoothing layer from the light sources and the relative radiation intensity. The intensity in the crossing point is the value where the intensity from two light sources are the same. The curves b and r show intensity distributions of the light sources on the smoothing layer. The crossing point has to be on the right place otherwise there will be sharp color transitions on the smoothing layer.

## Claims

1. A lighting system, comprising
a plurality of light sources (4a - 4i) arranged to emit light of defined radiation spectra,
a smoothing layer (3) positioned on a first distance (L1) from the light sources (4a - 4i), and through which the light is emitted,
the light sources (4a - 4i) being positioned on mutual distances (L2) from each other behind the smoothing layer (3), **characterized in that**
the light sources (4a-4i) are separately powered and grouped into separately controlled color areas, whereby the light emitted from the light sources (4a - 4i) has overlapping
radiation patterns and an intensity of the light sources that is spectrally optimized by numerical simulation of a light distribution for producing a defined color representation having said light distribution that resembles the view of a natural sky or other view with continuous and smooth color transitions on the smoothing layer (3),
and **in that** the lighting system further comprises
a computer configured to perform said numerical simulation of the light distribution and to transform data resulting from the numerical simulation into settings for the intensity of the light sources,
a controller (6) configured to store the settings in the form of input instructions for the intensity of the light sources (4a - 4i), the controller (6) further being configured to control the individual light sources (4a - 4d) of the light system to generate the defined color representation on the smoothing layer, and the controller having control electronics and power supplies (5a - 5d) for each color area to control the light sources (4a-4d); and optics for beam shaping and/or collimation for controlling the direction of light sources (4a - 4d).

2. A lighting system of claim 1, wherein said color representation is a model that simulates a sky dome light distribution.

3. A lighting system of any of claims 1 or 2, wherein the light sources (4a - 4i) are arranged in groups into 3 - 12, preferably 4-6, separate color areas for approximation of color curves constituting said color representation.

4. A lighting system of any of claims 1 -3, wherein the controller (6) has further stored instructions with data to generate the defined color representation and a temporal variation or development of that.

5. A lighting system of any of claims 1 - 4, wherein the controller (6) is adapted to control the light sources (4a - 4i) using said software instructions in dependence on a time-varying parameter related to the intensity, spectra, color or color temperature of the light emitted by the light sources (4a - 4i).

6. A lighting system of any of claims 2 - 5, wherein the model is a sky model that approximates full spectrum daylight for various atmospheric conditions.

7. A lighting system of claim 6, wherein said model simulates a variety of sky-like light distributions reflecting the location and orientation of the earth relative to the sun, the scattering of light through Rayleigh scattering and Mie scattering, the effect of ground albedo and the effect of haze.

8. A lighting system of claim 6 or 7, wherein each light source (4a - 4i) or the sum of more than one light sources (4a - 4i) having an emitting intensity state that is close to the sky light spectrum modelled for the corresponding position on the smoothing layer (3), and the emitting intensity state matching the color perceived by humans eyes as estimated by technical observer functions.

9. A lighting system of any of claims 1 - 8, wherein the light sources (4a - 4i) are Light Emitting Diodes, LEDs.

10. A lighting system of any of claims 1 - 9, wherein the smoothing layer (3) is a diffusor.

11. A lighting system of any of claims 1 - 10, wherein the color representation is a constant view.

12. A lighting system of any of claims 1 - 11, wherein the color representation is a constant view that can be changed by changing parameters related to the intensity, color or color temperature of the light emitted by the light sources (4a - 4i).

13. A lighting system of any of claims 1 - 12, wherein the controller (6) is adapted to control the light sources (4a - 4i) in dependence on a time-varying parameter related to the intensity, color or color temperature of the light emitted by the light sources (4a - 4i).

14. A lighting system of any of claims 1 - 13, wherein the parameters in the software instructions are varied in accordance with a cycle imitating a real day rhythm.

15. A lighting system of any of claims 1 - 14, wherein the color representation shows temporal variation.

16. A lighting system of any of claims 1 - 15, wherein the positions and radiation spectra of the light sources (4a - 4i) are produce different color areas as a light projection to constitute said color representation.

17. A method of producing a light projection with a lighting system according to claim 1, the method comprising producing the light projection as a color representation on the smoothing layer **characterized by** the following steps
spectrally optimizing the intensity of the light emitted from the light sources (4a - 4i) by numerical simulation in a computer for producing a defined color representation with continuous and smooth color transitions on the smoothing layer (3), and
data resulting from the numerical simulation is transformed into settings for the intensity of the light sources (4a - 4i) in the form of input instructions to the controller (6),
the controller (6) controlling the individual light sources (4a - 4d) of the light system to generate the defined color representation on the smoothing layer; and
using optics for beam shaping and/or collimation for controlling the direction of light sources (4a - 4d).

18. A method of claim 17, **characterized in that** a physical simulation is used for creating the model to operate as the background for the light produced, and a spectral optimization of the system is performed so that the produced light corresponds to the view both by color and spectral content.

19. A method of any of claim 17 or 18, wherein said color representation is produced on the basis of a spectral model created by transforming colors of the results of measurements, samples, video, photographs, estimations, and/or simulations of natural light or other views into a light spectrum by mathematical functions.

20. A method of any of claims 17 - 19, wherein the optimization of the intensity of the light sources (4a - 4i) to resemble the sky light distribution is performed by numerical simulation of color curves representing the sky light distribution.

21. A method of claim 20, wherein the color curves are lines that represent colors at different times calculated from an arch spanning from the horizon to more than 10 degrees elevation angle of the sky dome

## Patentansprüche

1. Beleuchtungssystem umfassend:
eine Mehrzahl von Lichtquellen (4a - 4i), die so angeordnet sind, dass sie Licht definierter Strahlungspektren ausstrahlen,
eine Glättungsschicht (3), die in einem ersten Abstand (L1) zu den Lichtquellen (4a - 4i) positioniert ist und durch die hindurch das Licht ausgestrahlt wird,
wobei die Lichtquellen (4a- 4i) zueinander in gegenseitigen Abständen (L2) hinter der Glättungsschicht (3) positioniert sind, **dadurch gekennzeichnet, dass**
die Lichtquellen (4a - 4i) separat mit Strom versorgt werden und in separat angesteuerte Farbbereiche gruppiert sind, wobei das von den Lichtquellen (4a - 4i) ausgestrahlte Licht überlappende Strahlungsmuster und eine Intensität der Lichtquellen aufweist, die durch numerische Simulation einer Lichtverteilung spektral optimiert wird, um auf der Glättungsschicht (3) eine definierte Farbdarstellung mit dieser Lichtverteilung, die der Ansicht eines Naturhimmels oder einer anderen Ansicht mit kontinuierlichen und glatten Farbübergängen ähnelt, zu erzeugen,
und dadurch, dass das Beleuchtungssystem ferner umfasst:
einen Computer, der dazu eingerichtet ist, die numerische Simulation der Lichtverteilung auszuführen und resultierende Daten aus der numerischen Simulation in Einstellungen für die Intensität der Lichtquellen umzuwandeln,
ein Steuergerät (6), das dazu eingerichtet ist, die Einstellungen in Form von Eingabeanweisungen für die Intensität der Lichtquellen (4a - 4i) zu speichern, wobei das Steuergerät (6) ferner dazu eingerichtet ist, die einzelnen Lichtquellen (4a - 4d) des Beleuchtungssystems anzusteuern, um die definierte Farbdarstellung auf der Glättungsschicht zu erzeugen, und das Steuergerät eine Steuerelektronik und Stromversorgungen (5a - 5d) für jeden Farbbereich aufweist, um die Lichtquellen (4a - 4d) anzusteuern; und
eine Optik für die Strahlformung und/oder Strahlbündelung zur Steuerung der Richtung der Lichtquellen (4a - 4d).

2. Beleuchtungssystem nach Anspruch 1, wobei es sich bei der Farbdarstellung um ein Modell handelt, das die Lichtverteilung einer Himmelswölbung simuliert.

3. Beleuchtungssystem nach einem der Ansprüche 1 oder 2, wobei die Lichtquellen (4a - 4i) gruppenweise in 3 - 12, bevorzugt 4 - 6, separate Farbbereiche zur Approximation von Farbkurven, die diese Farbdarstellung ausbilden, angeordnet sind.

4. Beleuchtungssystem nach einem der Ansprüche 1 bis 3, wobei das Steuergerät (6) ferner gespeicherte Anweisungen mit Daten aufweist, um die definierte Farbdarstellung und eine zeitliche Variation oder Entwicklung derselben zu erzeugen.

5. Beleuchtungssystem nach einem der Ansprüche 1 bis 4, wobei das Steuergerät (6) dazu eingerichtet ist, die Lichtquellen (4a - 4i) mithilfe der Software-Anweisungen in Abhängigkeit von einem zeitvariablen Parameter mit Bezug auf die Intensität, Spektren, Farbe oder Farbtemperatur des von den Lichtquellen (4a - 4i) ausgestrahlten Lichts anzusteuern.

6. Beleuchtungssystem nach einem der Ansprüche 2 bis 5, wobei es sich beim Modell um ein Himmelsmodell handelt, das dem Vollspektrum-Tageslicht für verschiedene atmosphärische Bedingungen nahekommt.

7. Beleuchtungssystem nach Anspruch 6, wobei das Modell eine Vielzahl verschiedener himmelsähnlicher Lichtverteilungen nachbildet, die den Ort und die Ausrichtung der Erde im Verhältnis zur Sonne, die Streuung des Lichts über die Rayleigh-Streuung und Mie-Streuung, den Albedo-Effekt der Erde und den Trübungseffekt abbilden.

8. Beleuchtungssystem nach Anspruch 6 oder 7, wobei jede Lichtquelle (4a - 4i) oder die Summe von mehr als einer Lichtquelle (4a - 4i) einen Ausstrahlungsintensitätszustand, der dem für die entsprechende Position auf der Glättungsschicht (3) modellierten Himmelslichtspektrum nahekommt, und den Ausstrahlungsintensitätszustand, der der von Menschenaugen wahrgenommenen Farbe entspricht, wie durch technische Betrachterfunktionen abgeschätzt.

9. Beleuchtungssystem nach einem der Ansprüche 1 bis 8, wobei die Lichtquellen (4a - 4i) Leuchtdioden, LEDs, sind.

10. Beleuchtungssystem nach einem der Ansprüche 1 bis 9, wobei die Glättungsschicht (3) ein Diffusor ist.

11. Beleuchtungssystem nach einem der Ansprüche 1 bis 10, wobei die Farbdarstellung eine konstante Ansicht ist.

12. Beleuchtungssystem nach einem der Ansprüche 1 bis 11, wobei die Farbdarstellung eine konstante Ansicht ist, die durch Änderung von Parametern mit Bezug auf Intensität, Farbe oder Farbtemperatur des von den Lichtquellen (4a - 4i) ausgestrahlten Lichts geändert werden kann.

13. Beleuchtungssystem nach einem der Ansprüche 1 bis 12, wobei das Steuergerät (6) dazu eingerichtet, die Lichtquellen (4a - 4i) in Abhängigkeit von einem zeitvariablen Parameter mit Bezug auf Intensität, Farbe oder Farbtemperatur des von den Lichtquellen (4a - 4i) ausgestrahlten Lichts anzusteuern.

14. Beleuchtungssystem nach einem der Ansprüche 1 bis 13, wobei die Parameter in den Software-Anweisungen entsprechend einem Zyklus variiert werden, der einen echten Tagesrhythmus imitiert.

15. Beleuchtungssystem nach einem der Ansprüche 1 bis 14, wobei die Farbdarstellung eine zeitliche Variation zeigt.

16. Beleuchtungssystem nach einem der Ansprüche 1 bis 15, wobei die Positionen und Strahlungsspektren der Lichtquellen (4a - 4i) unterschiedliche Farbbereiche als Lichtprojektion zur Ausbildung der Farbdarstellung erzeugen.

17. Verfahren zur Erzeugung einer Lichtprojektion mit einem Beleuchtungssystem nach Anspruch 1, wobei das Verfahren das Erzeugen der Lichtprojektion als Farbdarstellung auf der Glättungsschicht umfasst, **gekennzeichnet durch** die folgenden Schritte:
spektrale Optimierung der Intensität des von den Lichtquellen (4a - 4i) ausgestrahlten Lichts durch numerische Simulation in einem Computer zur Erzeugung einer definierten Farbdarstellung mit kontinuierlichen und glatten Farbübergängen auf der Glättungsschicht (3), und
Umwandlung von aus der numerischen Simulation resultierenden Daten in Einstellungen für die Intensität der Lichtquellen (4a - 4i) in Form von Eingabeanweisungen an das Steuergerät (6),
Ansteuern der einzelnen Lichtquellen (4a - 4d) des Beleuchtungssystems durch das Steuergerät (6), um die definierte Farbdarstellung auf der Glättungsschicht zu erzeugen; und
Verwenden einer Optik für die Strahlformung und/oder Strahlbündelung zur Steuerung der Richtung der Lichtquellen (4a - 4d).

18. Verfahren nach Anspruch 17, **dadurch gekennzeichnet, dass** eine physikalische Simulation verwendet wird, um das Modell so zu erstellen, dass es als Hintergrund für das erzeugte Licht arbeitet, und eine spektrale Optimierung des Systems ausgeführt wird, so dass das erzeugte Licht, sowohl durch Farbe als auch spektralen Inhalt, der Ansicht entspricht.

19. Verfahren nach einem der Ansprüche 17 oder 18, wobei die Erzeugung der Farbdarstellung auf Grundlage eines spektralen Modells erfolgt, das dadurch angelegt wird, dass Farben der Ergebnisse von Messungen, Proben, Videos, Fotos, Schätzungen und/oder Simulationen von natürlichem Licht oder anderen Ansichten über mathematische Funktionen in ein Lichtspektrum umgewandelt werden.

20. Verfahren nach einem der Ansprüche 17 bis 19, wobei die Optimierung der Intensität der Lichtquellen (4a - 4i) zur Nachbildung der Himmelslichtverteilung durch eine numerische Simulation von Farbkurven, die die Himmelslichtverteilung darstellen, ausgeführt wird.

21. Verfahren nach Anspruch 20, wobei es sich bei den Farbkurven um Linien handelt, die Farben zu unterschiedlichen Zeitpunkten darstellen, die anhand eines Bogens berechnet werden, der sich vom Horizont bis zu einem Höhenwinkel der Himmelswölbung von 10 Grad spannt.

## Revendications

1. Système d'éclairage comprenant :
une pluralité de sources lumineuses (4a - 4i) disposées de manière à émettre une lumière de spectres de rayonnement définis,
une couche de lissage (3) positionnée à une première distance (L1) des sources lumineuses (4a - 4i) et à travers de laquelle la lumière est émise,
lesdites sources lumineuses (4a - 4i) étant positionnées à des distances mutuelles (L2) entre elles derrière la couche de lissage (3), **caractérisé en ce que**
les sources lumineuses (4a - 4i) sont alimentées séparément et regroupées en zones de couleur commandées séparément, la lumière émise par lesdites sources lumineuses (4a - 4i) présentant des schémas de rayonnement qui se chevauchent et une intensité des sources lumineuses qui est optimisée sur le plan spectral par simulation numérique d'une distribution lumineuse pour produire une représentation chromatique définie ayant ladite distribution lumineuse qui ressemble à la vue d'un ciel naturel ou à une autre vue avec des transitions de couleur continues et fluides sur la couche de lissage (3),
et **en ce que** le système d'éclairage comprend également
un ordinateur configuré pour effectuer ladite simulation numérique de la distribution lumineuse et pour transformer des données résultant de la simulation numérique en réglages pour l'intensité des sources lumineuses,
un contrôleur (6) configuré pour enregistrer les réglages sous la forme d'instructions d'entrée pour l'intensité des sources lumineuses (4a - 4i), ledit contrôleur (6) étant également configuré pour commander les sources lumineuses individuelles (4a - 4d) du système d'éclairage afin de générer la représentation chromatique définie sur la couche de lissage, et ledit contrôleur comportant des éléments de commande électroniques et des alimentations électriques (5a - 5d) pour chaque zone de couleur pour commander les sources lumineuses (4a - 4d); et
des éléments optiques pour la mise en forme et/ou collimation du faisceau pour commander la direction de sources lumineuses (4a - 4d).

2. Système d'éclairage selon la revendication 1, dans lequel ladite représentation chromatique est un modèle qui simule une distribution lumineuse da la voûte céleste.

3. Système d'éclairage selon l'une des revendications 1 ou 2, dans lequel les sources lumineuses (4a - 4i) sont disposées par groupes en 3 - 12, préférablement 4 - 6, zones de couleur séparées pour l'approximation de courbes de couleur constituant ladite représentation chromatique.

4. Système d'éclairage selon l'une des revendications 1 à 3, dans lequel le contrôleur (6) comporte également des instructions enregistrées avec des données pour générer la représentation chromatique définie et une variation ou évolution temporelle de celle-ci.

5. Système d'éclairage selon l'une des revendications 1 à 4, dans lequel le contrôleur (6) est adapté pour commander les sources lumineuses (4a - 4i) à l'aide desdites instructions logicielles en fonction d'un paramètre variable dans le temps lié à l'intensité, aux spectres, à la couleur ou à la température de couleur de la lumière émise par les sources lumineuses (4a - 4i).

6. Système d'éclairage selon l'une des revendications 2 à 5, dans lequel le modèle est un modèle céleste qui se rapproche de la lumière du jour à spectre complet pour différentes conditions atmosphériques.

7. Système d'éclairage selon la revendication 6, dans lequel le modèle simule une multitude de distributions lumineuses semblables à celles du ciel qui traduisent le lieu et l'orientation de la Terre par rapport au Soleil, la diffusion de la lumière par la diffusion de Rayleigh et la diffusion de Mie, l'effet albédo du sol et l'effet de brume.

8. Système d'éclairage selon la revendication 6 ou 7, dans lequel chaque source lumineuse (4a - 4i) ou la somme de plus d'une source lumineuse (4a - 4i) présente un état d'intensité d'émission qui est proche du spectre lumineux du ciel modelé pour la position correspondante sur la couche de lissage (3), et l'état d'intensité d'émission correspond à la couleur perçue par l'œil humain telle qu'elle est estimée par des fonctions d'observateur techniques.

9. Système d'éclairage selon l'une des revendications 1 à 8, dans lequel les sources lumineuses (4a - 4i) sont des diodes électroluminescentes, LEDs.

10. Système d'éclairage selon l'une des revendications 1 à 9, dans lequel la couche de lissage (3) est un diffuseur.

11. Système d'éclairage selon l'une des revendications 1 à 10, dans lequel la représentation chromatique est une vue constante.

12. Système d'éclairage selon l'une des revendications 1 à 11, dans lequel la représentation chromatique est une vue constante qui peut être changée par le changement de paramètres liés à l'intensité, à la couleur ou à la température de couleur de la lumière émise par les sources lumineuses (4a - 4i).

13. Système d'éclairage selon l'une des revendications 1 à 12, dans lequel le contrôleur (6) est adapté pour commander les sources lumineuses (4a - 4i) en fonction d'un paramètre variable dans le temps lié à l'intensité, à la couleur ou à la température de couleur de la lumière émise par les sources lumineuses (4a - 4i).

14. Système d'éclairage selon l'une des revendications 1 à 13, dans lequel les paramètres dans les instructions logicielles sont variés selon un cycle imitant un rythme réel de la journée.

15. Système d'éclairage selon l'une des revendications 1 à 14, dans lequel la représentation chromatique présente une variation dans le temps.

16. Système d'éclairage selon l'une des revendications 1 à 15, dans lequel les positions et spectres de rayonnement des sources lumineuses (4a - 4i) produisent différentes zones de couleur comme projection lumineuse pour constituer ladite représentation chromatique.

17. Procédé pour produire une projection lumineuse avec un système d'éclairage selon la revendication 1, ledit procédé comprenant l'étape consistant à produire la projection lumineuse en tant que représentation chromatique sur la couche de lissage, **caractérisé par** les étapes suivantes consistant à
optimiser sur le plan spectral l'intensité de la lumière émise par les sources lumineuses (4a - 4i) par simulation numérique dans un ordinateur pour produire une représentation chromatique définie avec des transitions de couleur continues et fluides sur la couche de lissage (3), et
transformer des données résultant de la simulation numérique en réglages pour l'intensité des sources lumineuses (4a- 4i) sous la forme d'instructions d'entrée pour le contrôleur (6),
commander les sources lumineuses individuelles (4a - 4d) du système d'éclairage par le contrôleur (6) pour générer la représentation chromatique définie sur la couche de lissage; et
utiliser des éléments optiques pour la mise en forme et/ou collimation du faisceau pour commander la direction des sources lumineuses (4a - 4d).

18. Procédé selon la revendication 17, **caractérisé en ce qu'**une simulation physique est utilisée pour créer le modèle servant d'arrière-plan pour la lumière produite, et une optimisation spectrale du système est effectuée de telle façon que la lumière produite corresponde à la vue tant par la couleur que par la teneur spectrale.

19. Procédé selon l'une des revendications 17 ou 18, dans lequel ladite représentation chromatique est produite sur la base d'un modèle spectral créé par la transformation de couleurs des résultats de mesures, d'échantillons, de vidéos, de photographies, d'estimations et/ou de simulations de la lumière naturelle ou d'autres vues en un spectre de lumière par des fonctions mathématiques.

20. Procédé selon l'une des revendications 17 à 19, dans lequel l'optimisation de l'intensité des sources lumineuses (4a - 4i) pour imiter la distribution lumineuse du ciel est effectuée par une simulation numérique de courbes de couleur représentant la distribution lumineuse du ciel.

21. Procédé selon la revendication 20, dans lequel les courbes de couleur sont des lignes qui représentent des couleurs à différents moments, calculées à partir d'un arc qui s'étend de l'horizon jusqu'à un angle d'élévation de la voûte céleste de plus de 10 degrés.
